# EUROPÄISCHE PATENTSCHRIFT

(11) **EP 1 155 091 B1**
(45) Veröffentlichungstag und Bekanntmachung des Hinweises auf die Patenterteilung: **19.05.2004**
(21) Anmeldenummer: 00904975.0
(22) Anmeldetag: 28.01.2000
(51) Int. Cl.: C09D 5/02, C09D 5/04

(54) **MIT AKTINISCHER STRAHLUNG UND GEGEBENENFALLS THERMISCH HÄRTBARE PULVERSLURRY, VERFAHREN ZU IHRER HERSTELLUNG UND IHRE VERWENDUNG**
POWDER-SLURRY THAT CAN BE HARDENED BY ACTINIC RADIATION OR OPTIONALLY BY THERMAL MEANS, METHOD FOR PRODUCING SAID SLURRY AND USE OF THE SAME
POUDRE EN SUSPENSION DURCISSABLE PAR RAYONNEMENT ACTINIQUE ET EVENTUELLEMENT PAR VOIE THERMIQUE, SON PROCEDE DE PRODUCTION ET SON UTILISATION

(30) Priorität: 25.02.1999 DE 19908013
(43) Veröffentlichungstag der Anmeldung: 21.11.2001
(73) Patentinhaber: BASF Coatings AG, 48165 Münster (DE)
(72) Erfinder: BAUMGART, Hubert, D-48163 Münster (DE); RÖCKRATH, Ulrike, D-48308 Senden (DE); POTH, Astrid, D-48163 Münster (DE); OTT, Günther, D-48167 Münster (DE); SOBBE, Christin, D-59065 Hamm (DE); MEISENBURG, Uwe, D-47051 Duisburg (DE)
(74) Vertreter: Fitzner, Uwe, Dr.
(86) Internationale Anmeldenummer: PCT/EP2000/000676
(87) Internationale Veröffentlichungsnummer: WO 2000/050518

(56) Entgegenhaltungen:
- EP-A- 0 033 896
- DE-A- 19 617 086
- DE-A- 19 618 657
- GB-A- 2 261 664

## Beschreibung

Die vorliegende Erfindung betrifft eine neue. mit aktinischer Strahlung und gegebenenfalls thermisch härtbare Pulverslurry. Außerdem betrifft die vorliegende Erfindung ein neues Verfahren zur Herstellung dieser Pulverslurry. Nicht zuletzt betrifft die Erfindung die Verwendung der neuen Pulversluny für die Herstellung von Klarlacken sowie ein- und mehrschichtigen Klarlackierungen für den Automobilsektor und den industriellen Sektor.

Für die Beschichtung von Automobilkarosserien werden heute vorzugsweise Flüssiglacke. d. h. Spritzlacke, verwendet. Diese verursachen zahlreiche Umweltprobleme aufgrund ihres Lösemittelgehaltes. Dies gilt auch für die Fälle der Verwendung von Wasserklarlacken, weil diese noch immer gewisse Mengen an organischen Lösemitteln enthalten.

Thermisch härtbare Wasserklarlacke dieser Art sind aus der deutschen Patentschrift DE-A-196 23 371 bekannt. Direkt nach dem Auftragen trocknen die herkömmlichen Wasserklarlacke nicht als Pulver auf. sondern verfließen zu einem geschlossenen Film. Sie enthalten wässrige Sekundärdispersionen und werden im Automobilsektor für wässrige Mehrschichtlackierungen oder wässrige Einkomponenten- oder Zweikomponenten-Klarlacke eingesetzt. Hierbei werden absetzstabile Dispersionen mit einer mittleren Teilchengrößen von ca. 10 bis ca. 200 nm angestrebt. Grund ist die dem Fachmann geläufige Erfahrung. daß Dispersionspartikel um so weniger zum Absetzen neigen. je besser sie stabilisiert sind und je geringer ihre Partikelgröße ist. Für ein sicheres Applikationsverhalten und zur Reduzierung der Kocherneigung ist jedoch die Mitverwendung von bis zu 20 Gew.-% an Lösemitteln notwendig.

Aus diesem Grunde sind in den letzten Jahren vermehrte Anstrengungen unternommen worden, für die Beschichtung Pulverlacke zu verwenden. Die Ergebnisse sind jedoch bisher nicht zufriedenstellend, insbesondere weil zur Erzielung eines gleichmäßigen Aussehens erhöhte Schichtdicken erforderlich sind.

Weitere Probleme von Pulverlacken zur thermischen Härtung ergeben sich aus der Forderung nach Blockfestigkeit bei Lagerung, Lagerbarkeit auch bei Sommertemperaturen. Um diese zu gewährleisten muß der Erweichungspunkt der Lackpulver hoch sein. Wegen des hohen Erweichungspunktes der Lacke setzt dann aber schon beim Aufschmelzen der Pulver auf dem Substrat die thermisch aktivierte Vernetzungsreaktion ein, noch bevor die Lackoberfläche einen optimalen Verlauf erreicht hat.

Zur Lösung dieses Problems werden in den deutschen Patentschriften DE-A-24 36 186 oder DE-A-26 47 700, den europäischen Patentschriften EP-A-0 098 655, EP-A-0 286 594, EP-A-0 410 242, EP-A-0 522 648, EP-A-0 585 742, EP-A-0 636 669 oder EP-A-0 650 979, der internationalen Patentanmeldung WO 93/25596 oder den US-Patentschriften US-A-4,064,161, US-A-4,129,488, US-A-4,163,810. US-A-4,208,3130 oder US-A-5,639,560 UV-härtbare Pulverlacke vorgeschlagen, bei denen eine Trennung des Aufschmelzvorgangs und der Vernetzung möglich ist. Die bisher bekannt gewordenen UV-Pulverlacke basieren alle auf acrylisch oder vinylisch ungesättigten Stoffen, die wegen der für die gute Blockfestigkeit erforderlichen hohen Aufschmelztemperatur auch schon vor der UV-Bestrahlung thermisch polymerisieren können. Um die Blockfestigkeit zu garantieren, müssen für die UV-Pulverlacke absolut lösemittelfreie Polymere als Bindemittel eingesetzt werden, deren Gewinnung wegen deren Neigung zur thermischen Polymerisation sehr problematisch ist.

Es ist indes ein Problem der UV-Pulverlacke, daß sie zur Lackierung dreidimensionaler Objekte nur bedingt geeignet sind, da hierbei Schattenbereiche auftreten, in denen UV-Pulverlacke nicht oder nur zu einem geringen Grad ausgehärtet werden. Gleiches gilt für UV-Pulverlacke, welche deckende Pigmente enthalten.

Man hat versucht, dieses Problem durch Pulverlacke zu lösen, welche thermisch und mit aktinischer Strahlung härtbar sind. Ein solcher sogenannter Dual Cure-Pulverlack ist aus der europäischen Patentschrift EP-A-0 844 286 bekannt. Er enthält ein ungesättigtes Bindemittel und ein zweites hiermit copolymerisierbares Harz sowie einen Photoinitiator und einen thermischen Initiator und ist somit thermisch und mit aktinischer Strahlung härtbar. Allerdings wird dieser Dual Cure-Pulverlack als pigmentierter Decklack verwendet, welcher an der Oberfläche mit UV-Licht und in den substramahen Bereichen thermisch gehärtet wird. Ob dieser bekannte Pulverlack auch für die Herstellung von Klarlackschichten in Mehrschichtlackierungen tauglich ist, läßt sich der Patentschrift nicht entnehmen.

Das generelle Problem bei der Anwendung von Pulverlacken, daß sie wegen der abweichenden Applikationstechnologie auf vorhandenen, für Flüssiglacke ausgelegten Anlagen nicht verwendet werden können, wird indes auch durch den Dual Cure-Pulverlack nicht gelöst.

Dies war der Anlaß thermisch härtbare Pulverlacke in Form wäßriger Dispersionen zu entwickeln, die sich mit Flüssiglacktechnologien verarbeiten lassen. Diese Pulverklarlack-Dispersionen, welche von der Fachwelt auch als Pulverslurry oder Pulverklarlack-Slurry bezeichnet wird, ihre Herstellung und Applikation werden in den deutschen Patentschriften DE 196 13 547, DE 196 17 086, DE 196 18 657, DE 195 40 977 oder DE 195 18 392, der europäischen Patentschrift EP-A- 0 652 264, der internationalen Patentanmeldung WO 80/00447 oder der US-Patentschrift US-A- 4,268,542 beschrieben.

So wird bei dem aus der Patentschrift US-A-4,268,542 bekannten Verfahren, eine Pulverklarlack-Slurry auf Basis von Acrylatharzen verwendet, welche sich für die Beschichtung von Automobilen eignet. Hierbei wird zunächst eine herkömmliche Pulverschicht auf die Karosserie aufgetragen, wonach man die Pulverlack-Dispersion als Klarlack appliziert. Bei dieser Pulverklarlack-Slurry werden ionische Verdicker verwendet, welche zu einer relativ hohen Empfindlichkeit der applizierten Klarlackschicht gegen Feuchtigkeit. insbesondere gegen Schwitzwasser, führen. Außerdem muß mit hohen Einbrenntemperaturen von über 160°C gearbeitet werden.

Die aus der europäischen Patentschrift EP-A-0 652 264 bekannte Pulverklarlack-Slurry wird hergestellt, indem die festen Bindemittel- und Vernetzerkomponenten und gegebenenfalls Zusatzstoffe und Additive, wie es bei der Pulverlackherstellung üblich ist, zunächst gemeinsam extrudiert und anschließend trocken vermahlen werden, wonach sie in einem weiteren Schritt mit Hilfe von Emulgatoren und Netzmitteln in einer Naßvermahlung in eine Pulverklarlack-Slurry überführt werden.

Diese üblichen und bekannten Pulverklarlack-Slurries können im Gegensatz zu den Pulverklarlacken in konventionellen Naßlackieranlagen verarbeitet werden und lassen sich bei wesentlich niedrigeren Schichtdicken von ca. 40 µm gegenüber ca. 80 µm bei Pulverlacken mit gutem Verlauf und einer den Pulverlacken vergleichbaren Chemikalienfestigkeit applizieren.

Indes gewährleisten die konventionellen Mahlprozesse nicht immer einen Grad an Homogenisierung der Bestandteile, wie er eigentlich wünschenswert wäre, oder aber er muß durch eine aufwendige Mehrfachextrusion erzielt werden.

Üblicherweise sind in den herkömmlichen Pulverklarlack-Slurries größere Partikel unerwünscht, weil sie zum Sedimentieren neigen. Außerdem zeigen die Pulverklarlack-Slurries bei ihrer Applikation und Vernetzung eine verstärkte Neigung zur Bildung von Kochern (im Lackfilm eingeschlossene blasenförmige Hohlräume).

Ähnlich verhält es sich mit der Rißbildung, dem sogenannten "mudcracking" in den pulverförmigen, bei Raumtemperatur oder leicht erhöhter Temperatur vorgetrockneten, noch nicht eingebrannten Trockenfilmen. Solche Trocknungsrisse verlaufen beim Einbrennen nicht mehr vollständig und bilden im eingebrannten Film sichtbare Verlaufsstörungen in Form von lederstrukturierten Furchen aus, wobei diese Trocknungsrisse um so ausgeprägter und häufiger auftreten, je höher die Trockenfilmschichtdicke ist. Höhere Schichtdicken können bei der elektrostatischen Beschichtung von Automobilkarossen lokal auftreten, wenn an geometrisch besonders exponierten Stellen eine höhere Feldliniendichte vorliegt. Solche Stellen der Überbeschichtung sind besonders anfällig für das Mudcracking.

Die aus der deutschen Patentschrift DE-A-196 17 086 bekannte Pulverklarlack-Slurry weist eine mittlere Teilchengrößen der festen Partikel von 0,1 bis 10 µm auf. Vorzugsweise werden hierbei mittlere Teilchengröße von 0,23 bis 0,43 µm angewandt. Es ist notwendig, zur Stabilisierung zusätzlich zu der ionischen Stabilisierung auch noch externe Emulgatoren anzuwenden - in der Regel Polyethylenoxidaddukte, die die Beständigkeit der Lackierung gegenüber Wasser und Feuchtigkeit vermindern. Außerdem enthalten diese bekannten Pulverklarlack-Slurries noch immer gewisser Mengen an organischen Cosolventien oder Verlaufmittel, welche nicht entfernt werden können, weil sie für die Verlaufseigenschaften des angetrockneten Films essentiell sind. Überdies sind zu ihrer Herstellung spezielle Aggregate wie Druckentspannungshomogenisierdüsen notwendig. Vor ihrer Applikation werden sie mit Hilfe von Verdickern auf die Applikationsviskosität eingestellt; ein komplexes Viskositätsverhalten wird indes nicht beschrieben. Die Patentschrift erteilt ferner keine Lehre, wie das Problem des "mudcracking" bei Pulverklarlack-Slurries gelöst werden könnte.

Das allgemeine Problem der thermisch aktivierten Vernetzung beim Abdampfen des Wassers und Verschmelzen des resultierenden Pulverlackbelags ist mit dieser Technologie aber noch immer ungelöst, weil die Vernetzung nicht bei einer scharf definierten Temperatur einsetzt, sondern allmählich noch bevor das Wasser vollständig verdampft ist und sich eine optimale Oberfläche ausgebildet hat. Das nach einsetzender Vernetzungsreaktion wegen der erforderlichen hohen Temperaturen noch austretende Wasser ist außerdem die Ursache von Blasen und Kratern.

Aufgabe der vorliegenden Erfindung ist es, eine neue Pulverklarlack-Slurry zur Verfügung zu stellen, welche die Nachteile des Standes der Technik nicht mehr länger aufweist. Insbesondere soll die neue Pulverklarlack-Slurry mit einer geringeren Anzahl an Verarbeitungsschritten herstellbar sein als die herkömmlichen Pulverklarlack-Slurries; dabei sollen sie aber aufgrund ihrer typischen Pulverslurryeigenschaften und ihren vergleichbaren Partikelgrößen ein ähnlich vorteilhaftes Applikationsverhalten aufweisen wie diese. Im Gegensatz zu den bekannten Wasserklarlacken sollen die neuen Pulverklarlack-Slurries ein sichereres Applikationsverhalten hinsichtlich Kochern bei den geforderten Filmschichtstärken von ca. 40 - 50 µm auch ohne Zuhilfenahme von organischen Lösemitteln gewährleisten. Darüber hinaus sollen die neuen Pulverklarlack-Slurries mit aktinischer Strahlung härtbar sein. Daüber hinaus sollen sie die Möglichkeit eröffnen, die Vorteile der Härtung mit aktinischer Strahlung mit denen der thermischen Härtung zu verbinden, ohne die spezifischen Nachteile der beiden Methoden aufzuweisen.

Außerdem lag der vorliegenden Erfindung die Aufgabe zugrunde, ein neues Verfahren zur Herstellung von Pulverslurries zu finden, welches den wesentlichen Vorteil der Vermischung der Bestandteile in Lösung - die sehr gute Homogenität der resultierenden Partikel - weiterhin wahrt.

Demgemäß wurde die neue, strukturviskose, mit aktinischer Strahlung und gegebenenfalls thermisch härtbare Pulverslurry gefunden. welche feste sphärische Partikel einer mittleren Teilchengröße von 0,8 bis 20 µm und einer maximalen Teilchengröße von 30 µm enthält, wobei die Pulverklarlack-Slurry einen Gehalt an Ionen bildenden Gruppen von 0.05 bis 1 meq/g, einen Gehalt an Neutralisationsmitteln von 0,05 bis 1 meq/g und eine Viskosität von (i) 50 bis 1000 mPas bei einer Scherrate von 1000 s⁻¹, (ü) 150 bis 8000 mPas bei einer Scherrate von 10 s⁻¹ und (iii) 180 bis 12000 mPas bei einer Scherrate von 1 s⁻¹ aufweist.

Im folgenden wird die neue, strukturviskose, mit aktinischer Strahlung und gegebenenfalls thermisch härtbare Pulverslurry der Kürze halber als "erfindungsgemäße Slurry" bezeichnet.

Außerdem wurde das neue Verfahren zur Herstellung einer strukturviskosen, mit aktinischer Strahlung und gegebenenfalls thermisch härtbaren Pulverslurry durch
1) Emulgieren einer organischen Lösung, enthaltend
   1.1) mit aktinischer Strahlung härtbare Bestandteile und gegebenenfalls
   1.2) thermisch härtbare Bestandteile,
   wodurch eine Emulsion vom Typ Öl-in-Wasser resultiert,
2) Entfernen des organischen Lösemittels oder der organischen Lösemittel und
3) teilweisen oder völligen Ersatz des entfernten Lösemittelvolumens durch Wasser, wodurch eine Pulverklarlack-Slurry mit festen sphärischen Partikeln resultiert.
   gefunden, bei welchem der Pulverslurry
4) noch mindestens ein ionischer, insbesondere anionischer, Verdicker und mindestens ein nichtionischer Assoziativ-Verdicker zugesetzt wird.

Im folgenden wird das neue Verfahren zur Herstellung einer strukturviskosen, mit aktinischer Strahlung und gegebenenfalls thermisch härtbaren Pulverslurry der Kürze halber als "erfindungsgemäßes Verfahren" bezeichnet.

Die technischen Vorteile der erfindungsgemäßen Slurry resultieren daraus, daß sie mit aktinischer Strahlung gehärtet werden kann. Des weiteren liegen sie in der Möglichkeit, die bekannten Vorteile der thermisch härtbaren Pulverklarlack-Slurries - insbesondere die Spritzapplikation - mit denen von UV-Pulverlacken - insbesondere die Trennung des Aufschmelzvorgangs und der Vernetzung - zu verknüpfen. Überraschend hat sich gezeigt, daß eine UV-Härtung bei einem geringen Restwassergehalt des verschmolzenen Films besonders schnell und vollständig erfolgt. Das von der Hydrophilie der vernetzenden Lackfilme abhängige natürliche Gleichgewicht zwischen Wassergehalt im Film und Umgebungsluft stellt sich schon beim Abkühlen rasch ein. Noch mehr überraschte, daß die erfindungsgemäße Slurry auch ohne externe Emulgatoren und organische Lösemittel stabil ist.

Die erfindungsgemäße Slurry ist mit aktinischer Strahlung härtbar. Im Rahmen der vorliegenden Erfindung ist unter aktinischer Strahlung Elektronenstrahlung oder UV-Strahlung, insbesondere UV-Strahlung, zu verstehen.

Für die erfindungsgemäße Slurry ist es wesentlich, daß die mittlere Teilchengröße der festen Partikel bei 0,8 bis 20 µm, besonders bevorzugt bei 1 bis 15 µm und insbesondere bei 2 bis 10 µm liegt. Unter mittlerer Teilchengröße wird der nach der Laserbeugungsmethode ermittelte 50%-Medianwert verstanden, d.h., 50% der Partikel haben einen Teilchendurchmesser ≤ dem Medianwert und 50% der Partikel einen Teilchendurchmesser ≥ dem Medianwert.

Slurries mit derartigen mittleren Teilchengrößen weisen ein besseres Applikationsverhalten auf und zeigen bei den applizierten Filmstärken von > 30 µm, wie sie derzeitig in der Automobilindustrie bei der Endlackierung von Automobilen praktiziert werden, eine deutlich geringere Neigung zu Kochern und zum "mudcracking" als herkömmliche Pulverklarlack-Slurries.

Die Teilchengröße findet ihre obere Begrenzung dann, wenn die Partikel aufgrund ihrer Größe beim Einbrennen nicht mehr vollständig verlaufen können, und damit der Filmverlauf negativ beeinflußt wird. In Fällen geringerer Ansprüche an das Aussehen kann sie jedoch auch höher liegen. Als Obergrenze werden 30 µm für sinnvoll erachtet, da ab dieser Teilchengröße mit einer Verstopfung der Sprühdüsen der hochempfindlichen Applikationsapparaturen zu rechnen ist.

Die erfindungsgemäße Slurry kann im wesentlichen frei von organischen Lösemitteln sein. Im Rahmen der vorliegenden Erfindung bedeutet dies, daß sie einen Restgehalt an flüchtigen Lösemitteln von < 1 Gew.-%, bevorzugt < 0,5 Gew.-% und besonders bevorzugt < 0,2 Gew.-% haben kann. Hierbei ist es von ganz besonderem Vorteil, wenn der Restgehalt unterhalb der analytischen, insbesondere gaschromatographischen, Nachweisgrenze liegt.

Ebenso kann die erfindungsgemäße Slurry im vorstehend genannten Sinn im wesentlichen frei von externen Emulgatoren sein. Die vorstehend beschriebenen erfindungsgemäß zu verwendenden Teilchengrößen können somit auch ohne Zuhilfenahme von zusätzlichen externen Emulgatoren erhalten werden.

Erfindungsgemäß weisen die mit aktinischer Strahlung härtbaren Bestandteile sowie gegebenenfalls die thermisch härtbaren Bestandteile insgesamt einen Gehalt an Ionen bildenden Gruppen, entsprechend einer mittleren Säurezahl oder Amin-Zahl von 3 bis 56 g KOH/g Festkörper (MEQ-Säure oder -Amin von 0,05 bis 1,0 meq/g Festkörper), vorzugsweise bis 28 (MEQ-Säure oder -Amin: 0,5) und insbesondere bis 17 (MEQ-Säure oder -Amin: 0,3), auf.

Erfindungsgemäß ist es von Vorteil, wenn die Ionen bildenden Gruppen in den Bindemitteln vorliegen. Hierbei ist es erfindungsgemäß von ganz besonderem Vorteil, wenn diese Gruppen in den thermisch härtbaren Bindemitteln vorliegen, wenn es sich um mit aktinischer Strahlung und thermisch härtbare erfindungsgemäße Pulverslurries handelt.

Es wird erfindungsgemäß generell ein niedriger Gehalt solcher Gruppen angestrebt, da freie Gruppen dieser Art im gehärteten Lack zurückbleiben und dessen Beständigkeit gegegenüber Umweltstoffen und Chemikalien vermindern können. Andererseits muß der Gehalt an solchen Gruppen noch genügend hoch sein, um die gewünschte Stabilisierung zu gewährleisten.

Die Ionen bildenden Gruppen werden mit Hilfe von Neutralisationsmitteln zu 100% oder auch nur zu < 100% teilneutralisiert. Die Menge des Neutralisationsmittels wird in der Weise gewählt, daß der MEQ -Wert der erfindungsgemäßen Slurry unterhalb 1, vorzugsweise unterhalb 0,5 und insbesondere unterhalb 0.3 meq/g Festkörper. Erfindungsgemäß ist es von Vorteil, wenn die Menge des Neutralisationsmittels mindestens einem MEQ-Wert von 0,05 meq/g Festkörper entspricht.

Die chemische Natur der mit aktinischer Strahlung härtbaren Bindemittel sowie der gegebenenfalls mit verwendeten thermisch härtbaren Bindemittel ist daher in der Regel nicht beschränkend, solange hierin Ionen bildende Gruppen enthalten sind, die über eine Neutralisation in Salzgruppen überführbar sind und dadurch eine ionische Stabilisierung der Partikel in Wasser übernehmen können.

Als Anionen bildende Gruppen kommen Säuregruppen wie Carbonsäure-, Sulfonsäure- oder Phosphonsäuregruppen in Betracht. Demgemäß werden als Neutralisationsmittel Basen, wie Alkalimetallhydroxide, Ammoniak oder Amine verwendet. Alkalimetallhydroxide sind nur in beschränktem Maße einsetzbar, da die Alkalimetallionen beim Einbrennen nicht flüchtig sind und durch ihre Unverträglichkeit mit organischen Stoffen den Film trüben und zu Glanzverlusten führen können. Daher sind Ammoniak oder Amine bevorzugt. Im Falle von Aminen werden wasserlösliche tertiäre Amine bevorzugt. Beispielhaft seien N.N-Dimethylethanolamin oder Aminomethylpropanol-amin (AMP) genannt.

Als Kationen bildende Gruppen kommen primäre, sekundäre oder tertiäre Amine in Betracht. Demgemäß werden als Neutralisationsmittel insbesondere niedermolekulare organische Säuren wie Ameisensäure, Essigsäure oder Milchsäure verwendet.

Bindemittel, welche Kationen bildende Gruppen enthalten, sind von dem Gebiet der Elektrotauchlacke bekannt. Beispielhaft sei auf die Patentschriften EP-A-0 012 463, EP-A-0 612 818 oder US-A- 4,071,428 verwiesen.

Für den bevorzugten Einsatz der erfindungsgemäßen Slurry in der Automobildecklackierung als unpigmentierte Klarlacke werden Polymere oder Oligomere mit Säuregruppen als Ionen bildende Gruppen bevorzugt, da diese sogenannten anionischen Bindemittel in der Regel eine bessere Resistenz gegen Vergilbung als die Klasse der kationischen Bindemittel aufweisen.

Doch kationische Bindemittel mit in Kationen überführbaren Gruppen wie Aminogruppen sind prinzipiell ebenfalls verwendbar, sofern das Einsatzgebiet deren typische Nebeneigenschaften wie ihre Neigung zur Vergilbung verkraftet.

Als Bindemittel, welche Anionen bildende Gruppen enthalten, können beliebige Harze mit den vorstehend genannten Säuregruppen verwendet werden. Es ist jedoch wesentlich, daß sie daneben noch weitere Gruppen tragen, die eine Vernetzbarkeit gewährleisten.

Erfindungsgemäß werden bei den mit aktinischer Strahlung härtbaren Bindemitteln ethylenisch ungesättigte Gruppen bevorzugt. Im Falle der gegebenenfalls mitverwendeten thermisch härtbaren Bindemittel sind Hydroxylgruppen von Vorteil.

Als erfindungsgemäß zu verwendende Oligomere und Polymere dieser Art kommen vorzugsweise lineare und/oder verzweigte und/oder blockartig, kammartig und/oder statistisch aufgebaute Poly(meth)acrylate, Polyester, Alkyde, Polyurethane, acrylierte Polyurethane, acrylierte Polyester. Polylactone, Polycarbonate, Polyether, (Meth)Acrylatdiole oder Polyharnstoffe in Betracht.

Neben den den ethylenisch ungesättigten Gruppen sowie gegebenenfalls den Hydroxylgruppen können die Oligomere und Polymere noch andere funktionelle Gruppen wie Ether-, Amid-, Imid- und/oder Thiogruppen enthalten, sofern diese nicht die Vernetzungsreaktionen stören.

Diese Oligomere und Polymere sind dem Fachmann bekannt, und zahlreiche geeignete Verbindungen sind am Markt erhältlich.

Die erfindungsgemäße Slurry enthält erfindungsgemäß Bestandteile, welche mit aktinischer Strahlung, insbesondere UV-Strahlung härtbar sind. Geeignet sind alle vom UV-Lackgebiet her bekannten strahlenhärtbaren, niedermolekularen, oligomeren und/oder polymeren Verbindungen, vorzugsweise strahlenhärtbare Bindemittel, insbesondere auf Basis ethylenisch ungesättigter Präpolymerer und/öder ethylenisch ungesättigter Oligomerer, gegebenenfalls Reaktivverdünner sowie gegebenenfalls einen oder mehrere Photoinitiatoren. Beispiele geeigneter strahlenhärtbarer Bindemittel sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel eingesetzt, die frei von aromatischen Struktureinheiten sind.

Wesentlich ist, daß sie die Glasübergangstemperatur Tg der Partikel der erfindungsgemäßen Slurry nicht soweit erniedrigen, daß die Gefahr ihres Zusammenlaufens entsteht.

Besonders geeignet sind Acrylatharze mit seitenständigen funktionellen Gruppen wie z. B. Epoxidgruppen oder Hydroxygruppen, mit Molekulargewichten im Bereich von Mn 1000 bis 10000 mit Molekulargewichtsverteilungen < 4, wie sich beispielsweise in der DE-A-42 03 278 beschrieben sind. die anschließend mit Acrylsäure oder Acrylsäurederivaten, wie Acrylsäurechlorid, zu den entsprechenden acrylierten Acrylaten umgesetzt werden (EP-A-0 650 979).

Als epoxifunktionelle Vorstufe für die mit aktinischer Strahlung härtbaren acrylierten Acrylate sind beispielsweise epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind z.B. aus den Patentschriften EP-A-299 420, DE-B-22 14 650, DE-B-27 49 576, US-A-4,091,048 und US-A-3,781.379 bekannt.

Als Beispiele für ethylenisch ungesättigte Monomere, die keine Epoxidgruppe im Molekül enthalten. werden Alkylester der Acryl- und Methacrylsäure. die 1 bis 20 Kohlenstoffatome im Alkylrest enthalten, insbesondere Methylacrylat, Methylmethacrylat. Ethylacrylat, Ethylmethacrylat, Butylacrylat, Butylmethacrylat. 2-Ethylhexylacrylat und 2-Ethylhexylmethacrylat genannt. Weitere Beispiele für ethylenisch ungesättigte Monomere, die keine Epoxidgruppen im Molekül enthalten, sind Säureamide, wie z.B. Acrylsäure- und Methacrylsäureamid, Maleinsäureamid (MSA) vinylaromatische Verbindungen, wie Styrol. Methylstyrol und Vinyltoluol, Nitrile, wie Acrylnitril und Methacrylnitril, Vinyl- und Vinylidenhalogenide, wie Vinylchlorid und Vinylidenfluorid. Vinylester, wie z.B. Vinylacetat und hydroxylgruppenhaltige Monomere, wie z.B. Hydroxyethylacrylat und Hydroxyethylmethacrylat.

Die in den epoxidfunktionellen Bindemitteln eingesetzten epoxidfunktionellen Monomere sind vorzugsweise Glycidylacrylat, Glycidylmethacrylat, Allylester und Allylglycidylether.

Das epoxidgruppenhaltige Polyacrylatharz weist üblicherweise ein Epoxidäquivalentgewicht von 400 bis 2500, vorzugsweise 420 bis 700, ein zahlenmittleres Molekulargewicht (gelpermeationschromatographisch unter Verwendung eines Polystyrolstandards bestimmt) von 2.000 bis 20.000, vorzugsweise von 1.000 bis 10.000, und eine Glasübergangstemperatur Tg von 20 bis 100, vorzugsweise von 30 bis 90, besonders bevorzugt von 40 bis 80 und insbesondere 50 bis 70 °C auf (gemessen mit Hilfe der Differential Scanning Calorimetrie (DSC)). Ganz besonders bevorzugt werden ca. 50 °C. Die Uneinheitlichkeit der Molekulargewichtsverteilung liegt vorzugsweise unter 6, besonders bevorzugt unter 3. Geeignete Acrylatharze sind z. B. die in der deutschen Patentschrift DE-A-42 03 278 beschriebenen. Zum Einsatz können auch Gemische aus zwei oder mehr Acrylatharzen kommen.

Das epoxidgruppenhaltige Polyacrylatharz kann nach allgemein gut bekannten Methoden durch Polymerisation hergestellt werden.

Daneben können die funktionellen Harze auch aromatische Verbindungen aufweisen. Deren Anteil sollte unter 60 %, vorzugsweise unter 50 % liegen. Beispielsweise kann es sich um vinylaromatische Verbindungen handeln. Ein Beispiel hierfür ist Styrol.

Weiterhin einsetzbar sind:
- Ungesättigte Polymere verschiedenster Polymertypen mit 0,5 bis 3.5 Doppelbindungen auf ein Molekulargewicht von 1000 Dalton, die durch polymeranaloge Umsetzung von Polymeren mit ungesättigten Stoffen erhalten werden (DE-A-24 36 186).
- Polymethacrylate mit einem niedrigen Molekulargewicht von 500 bis 25.000 Dalton und enger Verteilung, die durch anionische Polymerisation erhalten und durch polymeranaloge Umsetzung mit Doppelbindungen funktionalisiert werden (US-A-4,064,161).
- Blends aus festen Epoxyacrylaten, wie sie durch Umsetzung von Diepoxyharzen mit Acrylsäure erhältlich sind, und teilkristallinen festen Polyesteracrylaten, wie sie aus carboxylterminierten Polyester durch Umsetzung mit Glycidylacrylaten erhältlich sind (US-A-4,129,488).
- Ungesättigte Polyurethanacrylate mit Schmelzbereich von 50 bis 180 °C (EP-A-0 410 242).
- Blends von ungesättigten Polyurethanacrylaten mit ungesättigten kristallinen Polyestern zur Verbesserung der Blockfestigkeit (EP-A-0 585 742)
- Blends von ungesättigten Polyestern oder Polyacrylaten mit Polyurethan-Vinylethem (EP-A-0 636 669).
- Funktionelle Polyacrylate aus olefinisch ungesättigten Monomeren durch Umsetzung funktionell komplementärer Polyacrylate (EP-A-0 650 978).
- Eine Ausführungsform zu EP-A-0 650 978, wobei die Basispolymeren in einer Hochtemperaturpolymerisation hergestellt werden.
- Doppelbindungsfreie Polyacrylate, die über eine H-Übertragung auf photochemisch angeregte, copolymere Fotoinitiatoren vom Norrish-Typ II vernetzt werden können (DE-A-44 13 436).
- Doppelbindungsfreie Polyacrylate mit Dihydrodicyclopentadienolacrylat, die über eine H-Übertragung auf photochemisch angeregte, copolymere Fotoinitiatoren vom Norrish-Typ II vernetzt werden können (DE-A-e196 00 147).

Weitere geeigete Beispiele für Bestandteile, die mit aktinischer Strahlung härtbar sind, gehen aus internationalen Patentanmeldungen hervor
- PCT/EP 96/05769:
   Vernetzte polymere Verbindungen mit mindestens einer ethylenischen Doppelverbindung, im Gemisch mit organischen Verbindungen, die mindestens ein H-Atom mit einer Bindungsenergie von max. 397 Kg/mol enthalten; oder
- PCT/EP97/07074:
   Strahlenvernetzbare Acrylatpolymeren, welche durch polymeranloge Umsetzung von Polyacrylaten mit Stoffen, durch die eine Gruppe eingeführt wird, die mit aktivischer Strahlung Radikale bildet, herstellbar sind.

Die erfindungsgemäße Slurry enthält mindestens einen der vorstehend beschriebenen Bestandteile.

Die für die UV-Vernetzung benötigten Photoinitiatoren sind in der Regel bereits in den vorstehend beschriebenen Bindemitteln enthalten und werden in der Regel ausgewählt aus den vom Stand der Technik her bekannten Verbindungen. Insbesondere finden Photoinitiatoren vom Norrish II-Typ Verwendung. Photoinitiatoren dieser Art sind üblich und bekannt. Ihr Wirkungsmechanismus beruht auf einer intramolekularen Variante der Wasserstoff-Abstraktionsreaktionen, wie sie in vielfältiger Weise bei photochemischen Reaktionen auftreten. Beispielhaft sei hier auf Römpp Chemie Lexikon, 9. erweiterte und neubearbeitete Auflage, Georg Thieme Verlag Stuttgart, Bd. 4, 1991, verwiesen. Ein Beispiel für einen geeigneten Photoinitiator dieser Art ist 4-Hydroxybenzophenon.

Ohne zugesetzte Photoinitiatoren sind Polymere laut DE-A-44 13 436 und DE-A-196 00 147 UV-härtbar. Zu besonders gut vernetzten Filmen führen Mischungen von ungesättigten Polymeren und Polymeren laut DE-A-44 13 436 und DE-A-196 00 147 mit besonders hohem Anteil an photochemisch anregbaren, copolymeren Photoinitiatoren vom Norrish-Typ II.

Erfindungsgemäß ist es von Vorteil, wenn die vorstehend beschriebenen Bestandteile überwiegend oder ausschließlich in den festen Partikeln vorliegen.

Erfindungsgemäß sind im Falle der gegebenenfalls mitverwendeten thermisch härtbaren Bindemittel die Polyacrylate, die Polyester, die Alkydharze, die Polyurethane und/oder die acrylierten Polyurethane von Vorteil und werden deshalb bevorzugt verwendet.

Beispiele geeigneter thermisch härtbarer Polyacrylate werden in der europäischen Patentanmeldung EP-A-0 767 185 und den amerikanischen Patentschriften US-A- 5 480 493, 5 475 073 oder 5 534 598 beschrieben. Weitere Beispiele besonders bevorzugter Polyacrylate werden unter der Marke Joncryl^{R} vertrieben, wie etwa Joncryl^{R} SCX 912 und 922,5. Die Herstellung dieser Polyacrylate ist allgemein bekannt und wird beispielsweise in dem Standardwerk Houben-Weyl, Methoden der organischen Chemie, 4. Auflage, Band 14/1, Seiten 24 bis 255, 1961, beschrieben.

Die Herstellung der bevorzugt mitverwendeten thermisch härtbaren Polyester und Alkydharze ist allgemein bekannt und wird beispielsweise in dem Standardwerk Ullmanns Encyklopädie der technischen Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, bschrieben.

Die besonders bevorzugt zu verwendenden thermisch härtbaren Polyurethane und/oder acrylierten Polyurethane werden beispielsweise in den Patentschriften EP-A-0 708 788, DE-A-44 01 544, DE-A-195 34 361, EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747 oder EP-A-0 401 565 beschrieben.

Als Vernetzungsmittel für die thermische Härtung sind alle auf dem Gebiet der lichtstabilen Decklacke gebräuchlichen Vernetzungsmittel geeignet. Beispiele hierfür sind veretherte Melamin-Formaldehydharze. Benzoguanaminharze, Anhydridgruppen enthaltende Verbindungen oder Harze, Epoxidgruppen enthaltende Verbindungen oder Harze, blockierte und/oder unblockierte Polyisocyanate, beta-Hydroxyalkylamide wie N,N,N',N'-Tetrakis(2-hydroxyethyl)adipamid oder N,N,N',N'-Tetrakis(2-hydroxypropyl)-adipamid, mit Verbindungen mit im Mittel mindestens zwei zur Umesterung befähigten Gruppen, beispeilsweise Umsetzungsprodukte von Malonsäurediester und Polyisocyanaten oder von Estern und Teilestern mehrwertiger Alkohole der Malonsäure mit Monoisocyanaten, wie sie der europäischen Patentschrift EP-A-0 596 460 beschrieben werden, und/oder Tris(alkoxycarbonylamino)triazine, wie sie in den Patentschriften US-A-4 939 213, US-A-5 084 541, US-A-5 288 865 oder EP-A-0 604 922 beschrieben werden.

Von diesen sind die blockierten Polyisocyanate vorteilhaft und werden deshalb besonders bevorzugt verwendet. Beispiele geeigneter blockierter Polyisocyanate werden in den deutschen Patentschriften DE-A-196 17 086 oder 196 31 269, in den europäischen Patentschriften EP-A-0 004 571 oder 0 582 051 oder in der US-Patentschrift US-A-4.444,954 beschrieben.

Die erfindungsgemäße Slurry enthält nichtionische und ionische Verdicker. Hierdurch wird der Neigung der vergleichsweise großen festen Partikel zur Sedimentation wirksam begegnet.

Beispiele nichtionischer Verdicker sind Hydroxyethylcellulose und Polyvinylalkohole. Sogenannte, nichtionische Assoziativ-Verdicker sind in vielfältiger Auswahl ebenfalls am Markt verfügbar. Sie bestehen in der Regel aus wasserverdünnbaren Polyurethanen. die Reaktionsprodukte von wasserlöslichen Polyetherdiolen, aliphatischen Düsocyanaten und monofunktionellen hydroxylischen Verbindungen mit organophilem Rest sind.

Eine besonders bevorzugte Ausführung betrifft nichtionische Assoziativ-Verdicker, die photochemisch mit sich selbst und/oder den übrigen mit aktinischer Strahlung härtbaren Bestandteilen reagieren können, wodurch eine weitere Verbesserung der Lackeigenschaften erreicht wird. Mit aktinischer Strahlung härtbare nichtionische Assoziativ-Verdicker lassen sich erhalten durch Einbau von Doppelbindungen oder Gruppen mit leicht abstrahierbaren H-Atomen, wie Dicyclopentadienylgruppen und/oder Photoinitiatorgruppen vom Norrish II-Typ, insbesondere Benzophenongruppen.

Ebenfalls kommerziell erhältlich sind ionische Verdicker. Diese enthalten üblicherweise anionische Gruppen und basieren insbesondere auf speziellen Polyacrylatharzen mit Säuregruppen. die teilweise oder vollständig neutralisiert sein können.

Beispiele geeigneter, erfindungsgemäß zu verwendender Verdicker sind aus dem Lehrbuch "Lackadditive" von Johan Bielemann, Wiley-VCH, Weinheim, New York, 1998, Seiten 31 bis 65, bekannt und brauchen deshalb nicht mehr näher beschrieben zu werden.

Für die erfindungsgemäße Slurry ist es wesentlich, daß beide der vorstehend beschriebenen Verdicker-Typen hierin enthalten sind. Erfindungsgemäß ist es hierbei von Vorteil, wenn die Verdicker überwiegend oder ausschließlich in der wäßrigen Phase vorliegen.

Die Menge der zuzusetzenden Verdicker und das Verhältnis von ionischem zu nichtionischem Verdicker richtet sich nach der gewünschten Viskosität der erfindungsgemäßen Slurry, die wiederum von der benötigten Absetzstabilität und den speziellen Bedürfnissen der Spritzapplikation vorgegeben werden. Der Fachmann kann daher die Menge der Verdicker und das Verhältnis der Verdicker-Typen zueinander anhand einfacher Überlegungen gegebenenfalls unter Zuhilfenahme von Vorversuchen ermitteln.

Erfindungsgemäß wird ein Viskositätsbereich von 50 bis 1500 mPas bei einer Scherrate von 1000 s⁻¹ und von 150 bis 8000 mPas bei einer Scherrate von 10 s⁻¹ sowie von 180 bis 12000 mPas bei einer Scherrate von 1 s⁻¹ eingestellt.

Dieses als "strukturviskos" bekannte Viskositätsverhalten beschreibt einen Zustand, der einerseits den Bedürfnissen der Spritzapplikation und andererseits auch den Erfordernissen hinsichtlich Lager- und Absetzstabilität Rechnung trägt: Im bewegten Zustand, wie beispielsweise beim Umpumpen der erfindungsgemäßen Slurry in der Ringleitung der Lackieranlage und beim Versprühen, nimmt die erfindungsgemäße Slurry einen niederviskosen Zustand ein, der eine gute Verarbeitbarkeit gewährleistet. Ohne Scherbeanspruchung hingegen steigt die Viskosität an und gewährleistet auf diese Weise, daß der bereits auf dem zu lackierenden Substrat befindliche Lack eine verringerte Neigung zum Ablaufen an senkrechten Flächen zeigt ("Läuferbildung"). In gleicher Weise führt die höhere Viskosität im unbewegten Zustand, wie etwa bei der Lagerung, dazu, daß ein Absetzen der festen Partikel größtenteils verhindert wird oder ein Wiederaufrühren der während der Lagerzeit nur schwach abgesetzten erfindungsgemäßen Pulverslurry gewährleistet ist.

Die festen Partikel der erfindungsgemäßen Slurry können neben den vorstehend beschriebenen wesentlichen Bestandteilen Additive enthalten, wie sie in Klarlacken üblicherweise verwendet werden. Hierbei ist es wesentlich, daß diese Additive die Glasübergangstemperatur Tg der Bindemittel nicht wesentlich absenken.

Beispiele geeigneter Additive sind Katalysatoren für die Vernetzung, Emulgatoren. Entschäumer, Haftvermittler, Additive zur Verbesserung der Untergrundbenetzung, Additive zur Verbesserung der Oberflächenglätte, Mattierungsmittel. Nanopartikel, Lichtschutzmittel. Korrosionsinhibitoren, Biozide, Flammschutzmittel oder Polymerisationsinhibitoren. wie sie in dem Buch "Lackadditive" von Johan Bielemann. Wiley-VCH. Weinheim, New York, 1998, im Detail beschrieben werden.

Der erfindungsgemäßen Slurry können im Film einvernetzbare Verlaufhilfsmittel, mit aktinischer Strahlung härtbare Reaktivverdünner oder thermisch härtbare Reaktivverdünner zugesetzt werden. Wichtig ist jedoch, daß diese Bestandteile sich bevorzugt in der äußeren, wässrigen Phase der erfindungsgemäßen Slurry befinden und nicht in der dispersen organischen Phase, wo sie eine Absenkung der Glasübergangstemperatur Tg und damit eine Koaleszenz oder Koagulation von gegebenenfalls abgesetzten Partikeln bewirken würden.

Beispiele für geeignete Verbindungen dieser Art sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7- Oxanorbonen; Beispiele geeigneter acyclischer Monoolefine sind in Kohlenwasserstoffgemischen enthalten, die in der Erdölverarbeitung durch Cracken erhalten werden (C₅-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht M_{w} von 600 bis 1100 auf;

Weitere Beispiele für geeignete Verbindungen diese Art sind verzweigte, cyclische und/oder acyclische C₉-C₁₆-Alkane, die mit mindestens zwei Hydroxylgruppen funktionalisiert sind, insbesondere Diethyloctandiole, sowie Cyclohexandimethanol, Hydroxypivalinsäureneopentylglykolester, Neopentylglykol, Trimethylolpropan oder Pentaerythrit.

Als strahlenhärtbare Reaktivverdünner kommen niedermolekulare polyfunktionelle ethylenisch ungesättigte Verbindungen in Betracht. Beispiele geeigneter Verbindungen dieser Art sind Ester der Acrylsäure mit Polyolen, wie Neopentylglykoldiacrylat, Trimethylolpropantriacrylat, Pentaerythrittriacrylat oder Pentaerythrittetraacrylat; oder Umsetzungsprodukte von Hydroxyalkylacrylaten mit Polyisocyanaten, insbesondere aliphatischen Polyisocyanaten.

Die Reaktiverdünner können in der wäßrigen Phase und/oder den festen Partikeln der erfindungsgemäßen Slurry vorliegen.

Sofern die erfindungsgemäße Slurry mit aktinischer Strahlung und thermisch härtbar ist, kann das Verhältnis von thermisch vernetztbaren Bestandteilen zu mit aktinischer Strahlung vernetztbaren Bestandteilen breit variieren. Es richtet sich in erster Linie danach, ob die erfindungsgemäße Slurry in erster Linie thermisch oder in erster Linie mit aktinischer Strahlung härtbar sein soll, sowie nach dem Verwendungszweck der erfindungsgemäßen Slurry. So wird man eine erfindungsgemäße Slurry, welche in erster Linie mit aktinischer Strahlung härtbar ist, bereitstellen, wenn man Substrate beschichten will, die thermisch nur gering belastbar sind. Im allgemeinen kann das Verhältnis von mit aktinischer Strahlung härtbaren Bestandteilen zu thermisch härtbaren bei 20 : 1 bis 1 : 20, vorzugsweise 10 : 1 bis 1 : 10, besonders bevorzugt 5 : 1 bis 1 : 5 und insbesondere 3 : 1 bis 1 : 3 liegen. Der Fachmann kann daher in jedem Einzelfall das geeignete Verhältnis aufgrund seines Fachwissens gegebenenfalls unter Zuhilfenahme einfacher Vorversuche ermitteln.

An und für sich kann die erfindungsgemäße Slurry in beliebiger Weise hergestellt werden. Erfindungsgemäß ist es indes von Vorteil, sie mit Hilfe des erfindungsgemäßen Verfahrens herzustellen.

Bei dem erfindungsgemäßen Verfahren werden die ionisch stabilisierbaren Bindemittel und die Vernetzungsmittel sowie gegebenenfalls die Additive und Reaktivverdünner in organischer Lösung gemischt und zusammen mit Hilfe von Neutralisationmitteln in Wasser nach dem Sekundärdispersionsverfahren dispergiert. Es bildet sich zunächst eine Wasser-in-Öl-Emulsion aus, die bei weiterer Verdünnung in eine Öl-in-Wasser-Emulsion umschlägt. Dieser Punkt wird im allgemeinen bei Festkörpergehalten von < 50 Gew.-%, bezogen auf die Emulsion, erreicht und ist äußerlich an einem stärkeren Abfall der Viskosität während der Verdünnung erkennbar.

Die so erhaltene, noch lösemittelhaltige Emulsion wird anschließend durch azeotrope Destillation von Lösemitteln befreit.

Die Destillationstemperatur richtet sich in erster Linie nach der Glasübergangstemperatur Tg der Bindemittel. Um Koagulate, d.h. ein Verfließen der erfindungsgemäß nur geringfügig stabilisierten Partikel zu einer separaten kontinuierlichen organischen Phase, während der Destillation zu vermeiden, ist es wesentlich, die Destillationstemperatur unterhalb der Glasübergangstemperatur Tg zu halten. Die Glasübergangstemperatur ist ersatzweise auch über die Mindestfilmbildetemperatur der Dispersion beschreibbar. Die Mindestfilmbildetemperatur kann ermittelt werden, indem die Dispersion mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet.

Erfindungsgemäß ist es von Vorteil, wenn die Mindestfilmbildetemperatur mehr als 20 °C, insbesondere mehr als 30 °C beträgt.

Erfindungsgemäß ist es von Vorteil, wenn die zu entfernenden Lösemittel bei einer Destillationstemperatur unterhalb 70 °C, bevorzugt unterhalb 50 °C und insbesondere unterhalb 40 °C abdestilliert werden. Gegebenenfalls wird der Destillationsdruck hierbei so gewählt, daß bei höhersiedenden Lösemitteln dieser Temperaturbereich eingehalten wird.

Im einfachsten Fall kann die azeotrope Destillation dadurch bewerkstelligt werden, daß man die Emulsion bei Raumtemperatur im offenen Gefäß während mehrerer Tage rührt. Im bevorzugten Fall wird die lösemittelhaltige Emulsion in einer Vakuumdestillation von den Lösemitteln befreit.

Die abgedunstete oder abdestillierte Menge an Wasser und Lösemitteln werden zur Vermeidung von hohen Viskositäten durch Wasser ersetzt. Die Zugabe des Wassers kann vorher, nachher oder auch während des Abdunstens oder der Destillation durch portionsweise Zugabe erfolgen.

Nach Verlust der Lösemittel steigt die Glasübergangstemperatur Tg der dispergierten Teilchen an, und es bildet sich anstelle der bisherigen lösemittelhaltigen Emulsion (flüssig-in-flüssig-Dispersion) eine fest-in-flüssig-Dispersion - die erfindungsgemäße Slurry - aus.

Die erfindungsgemäße Slurry weist vorteilhafterweise einen Festkörpergehalt von 10 bis 60 Gew.-%, insbesondere von 20 bis 50 Gew.-%, auf.

Zur Herstellung der erfindungsgemäßen Klarlacke wird die erfindungsgemäße Slurry auf das zu beschichtende Substrat appliziert. Hierbei brauchen keine besonderen Maßnahmen ergriffen zu werden. sondern die Applikation kann nach den üblichen und bekannten Verfahren, beispielsweise nach dem bei der Automobilerstlackierung angewandten Naß-in-naß-Verfahren, erfolgen, was ein weiterer besonderer Vorteil der erfindungsgemäßen Slurry ist.

Noch ein weiterer besonderer Vorteil der erfindungsgemäßen Slurry liegt darin, daß sie nicht nur für die Herstellung von einschichtigen Klarlackierungen. sondern auch von mehrschichtigen Klarlackierungen geeignet ist. Zur Herstellung dieser mehrschichtigen Klarlackierungen kann sie mit allen üblichen und bekannten Klarlacken kombiniert werden. Die betreffenden mehrschichtigen Klarlackierungen weisen eine sehr gute Zwischenschichthaftung auf.

Nach ihrer Applikation trocknet die erfindungsgemäße Slurry problemlos auf und zeigt bei der Verarbeitungstemperatur, in der Regel bei Raumtemperatur, kein Verfilmen. D.h., die als Naßschicht applizierte erfindungsgemäße Slurry lüftet bei Raumtemperatur oder leicht erhöhten Temperaturen unter Wasserabgabe ab, ohne daß die darin enthaltenen Partikel ihre ursprüngliche feste Form verändern. Der pulverförmige feste Film läßt das Restwasser leichter Abdampfen als ein verfließender Naßfilm. Dadurch wird die Gefahr von im gehärteten Film eingeschlossenen Blasen von verdampftem Wasser ("Kochern") vermindert. Außerdem ist die Neigung zum "mudcracking" ausgesprochen gering. Überraschend ist hierbei der Befund, daß die erfindungsgemäßen Slurries eine umso geringere Neigung zu "mudcracking" haben, je höher ihre Partikelgrößen sind.

In dem nachfolgenden Härtungsschritt wird die nun weitgehend wasserfreie Pulverschicht geschmolzen und zur Vernetzung gebracht. In manchen Fällen kann es von Vorteil sein, den Verlaufsprozess und die Vemetzungsreaktion mit einem zeitlichen Versatz ablaufen zu lassen, indem ein Stufenheizprogramm oder eine sogenannte Aufheizrampe gefahren wird. Die geschmolzene Schicht wird dann durch Bestrahlen mit aktinischer Strahlung, insbesondere UV-Licht, gehärtet.

Der Strahlenhärtung kann eine thermische Härtung nachfolgen, bei der auch die substratnahen Bereiche der Klarlackschicht und/oder bei dreidimensionalen Objekten die Schattenbereiche insbesondere thermisch ausgehärtet werden können. Im allgemeinen wird die thermische Härtung bei Temperaturen zwischen 120 und 160 °C durchgeführt. Die entsprechende Einbrennzeit liegt zwischen 1 und 60 Minuten. Hierbei zeigt sich der besondere Vorteil der erfindungsgemäßen Slurry, nämlich daß sie über das Verhältnis von thermisch härtbaren Bestandteilen zu mit aktinischer Strahlung härtbaren Bestandteilen einfach und genau auf die thermische Belastbarkeit und/oder die dreidimensionale Gestalt des zu beschichtenden Substrats abgestimmt werden kann. So wird man bei einem dreidimensionalen Objekt, das große Schattenbereiche aufweist, den Schwerpunkt auf die thermische Härtung legen und die Strahlenhärtung nur für eine erste partielle Vernetzung anwenden. Handelt es sich dagegen um ein planares. thermisch nur wenig belastbares Substrat wird man in der Hauptsache die Strahlenhärtung anwenden. Zwischen diesen beiden Extremen ist jede Abstufung denkbar und auch ausführbar.

Der hierbei resultierende einschichtige oder mehrschichtige Klarlackierung weist hervorragende anwendungstechnische Eigenschaften auf. So haftet der erfindungsgemäße Klarlack fest auf allen üblichen und bekannten Basislackschichten oder auf grundierten oder ungrundierten Substraten wie Metall, Glas, Holz oder Kunststoff. Er ist von hohem Glanz, glatt, kratzfest, witterungsbeständig und frei von Störungen. Außerdem kommt er aufgrund seines vorteilhaften Eigenschaftsprofils auch für Anwendungen außerhalb der

Automobillackierung in Betracht, insbesondere für die Lackierung von Möbeln und die industrielle Lackierung, inklusive Coil Coating und Container Coating.

### Beispiele

### Herstellbeispiel 1

### 1. Herstellung des Lösungspolyacrylatharzes A

1291,5 Teile Methylethylketon (MEK) und 43,0 Teile Mercaptoethanol wurden vorgelegt und auf 80°C erwärmt. Zu der Vorlage wurden bei 80°C während 5 h über zwei getrennte Zulaufbehälter der Initiator, bestehend aus 143,5 Teilen TBPEH (tert.-Butylperethylhexanoat) und 86,1 Teilen MEK, und die Monomerenmischung, bestehend aus 470,7 Teilen tert.-Butylacrylat, 254,0 Teilen n-Butylmethacrylat, 287 Teilen Cyclohexylmethacrylat, 409,0 Teilen Hydroxypropylmethacrylat und 14,3 Teilen Acrylsäure, zudosiert. Anschließend wurde auf 85°C erwärmt, und im Vakuum wurde bei 800 bis 500 mbar ein Teil der flüchtigen Anteile während 5 h abgezogen. Danach ließ man auf ca. 60°C erkalten und trug die Harzlösung aus.

Die Harzlösung wies folgende Kennzahlen auf:

| | |
|---|---|
| Festkörper | 69,8% (1h bei 130°C) |
| Säurezahl | 27 mg KOH/g Festharz |

### Herstellbeispiel 2

### Die Herstellung eines blockierten Polyisocyanats als Vernetzer

837 Teile Isophorondiisocyanat wurden in einem geeigneten Reaktionsgefäß vorgelegt und mit 0,1 Teilen Dibutylzinndilaurat versetzt. Sodann ließ man eine Lösung aus 168 Teilen Trimethylolpropan und 431 Teilen Methylethylketon langsam zulaufen. Durch die exotherme Reaktion stieg die Temperatur an. Nachdem 80 °C erreicht waren, wurde die Temperatur durch äußere Kühlung konstant gehalten, und der Zulauf wurde gegebenenfalls leicht gedrosselt. Nach Ende des Zulaufs hielt man noch für ca. 1 Stunde auf dieser Temperatur, bis der Isocyanatgehalt des Festkörpers 15,7 % (bezogen auf NCO-Gruppen) erreicht hatte. Anschließend wurde das Reaktionsgemisch auf 40 °C gekühlt, und es wurde eine Lösung von 362 Teilen 3,5-Dimethylpyrazol in 155 Teilen Methylethylketon innerhalb 30 Minuten zugegeben. Nachdem das Reaktionsgemisch sich durch die Exothermie auf 80 °C erwärmt hatte, hielt man die Temperatur für 30 Minuten konstant, bis der NCO-Gehalt auf kleiner 0,1 % abgesunken war. Sodann fügte man 47 Teile n-Butanol zu der Reaktionsmischung hinzu, hielt für weitere 30 Minuten bei 80 °C und trug sie nach kurzer Kühlung aus.

Das Reaktionsprodukt wies einen Festgehalt von 69,3 % (1h bei 130 °C) auf.

### Herstellbeispiel 3

### Herstellung eines mit aktinischer Strahlung härtbaren Vernetzungsmittels

1350 Teile Vestanat® T 1890 (trimerisiertes Isophorondiisocyanat; Fa. Creanova, ehem. Chemische Werke Hüls) wurden zusammen mit 907,2 Teilen Methylethylketon (MEK) vorgelegt und mit 0,22 Teilen Dibutylzinndilaurat und 4,4 Teilen Hydrochinon versetzt. Sodann ließ man 864 Teile 4-Hydroxybutylacrylat langsam zulaufen. Durch die exotherme Reaktion stieg die Temperatur an. Nachdem 60°C erreicht waren, wurde die Temperatur durch äußere Kühlung konstant gehalten und der Zulauf wurde gegebenenfalls leicht gedrosselt. Nach Ende des Zulaufs hielt man die Reaktionsmischung noch für ca. 2 Stunden dieser Temperatur, bis der Isocyanatgehalt des Festkörpers auf kleiner 0.1% abgesunken war. Sodann fügte man 37 Teile n-Butanol zu, hielt für weitere 30 Minuten bei 60°C und trug das Reaktionsprodukt nach kurzer Kühlung aus. Das Reaktionsprodukt hatte einen Festgehalt von 69,5% (1h bei 130°C) und eine Viskosität von 5,9 dPas (Originalviskosität; Platte/Kegel-Viskosimeter bei 23°C).

### Beispiel 1

### Die Herstellung der erfindungsgemäßen Pulverklarlackslurry 1

375,7 Teile der Acrylatharzlösung A gemäß Herstellbeispiel 1, 270,2 Teile der Vernetzerlösung gemäß Herstellbeispiel 2 und 636,4 Teile des mit aktinischer Strahlung härtbaren Vernetzungsmittels gemäß Herstellbeispiel 3 wurden bei Raumtemperatur in einem offenen Rührgefäß 15 min lang unter Rühren vermischt. Man fügte sodann 9,0 Teile Cyagard® 1164 L (UV-Absorber, Fa. Cytec), 9,4 Teile Tinuvin® flüssig 123 (sterisch gehindertes Amin "HALS", Fa. Ciba Geigy), 6,7 Teile N,N-Dimethylethanolamin, 6,7 Teile Dibutylzinndilaurat (DBTL) und 120.0 Teile Darocure® 1173 (Photoinitiator der Firma Ciba Specialty Chemicals) und 30,0 Teile Irgacure® 184 (Photoinitiator der Firma Ciba Specialty Chemicals) zu und rührte für weitere 2 Stunden bei Raumtemperatur. Sodann verdünnte man mit 528,8 Teilen vollentsalztem Wasser in kleinen Portionen. Nach einer Zwischenpause von 15 min. wurden weitere 650,0 Teile VE-Wasser zugegeben. Es bildete sich eine niedrigviskose wässrige Emulsion mit einem theoretischen Festgehalt von 37%, die bei Raumtemperatur für weitere 50 Stunden gerührt wurde. Die abgedunstete Flüssigkeitsmenge wurde durch Zugabe von VE-Wasser bis zum ursprünglichen Füllstand ergänzt. Man erhielt eine pulverförmige Klarlacksuspension (Slurry) mit folgenden Kennzahlen:

| | |
|---|---|
| Festkörper (2 h 80°C) | 36,2% |
| MEQ-Säure | 0,05 meq/g Festkörper |
| MEQ-Base | 0,08 meq/g Festkörper |
| Lösemittelgehalt | < 0,05% (gaschromatographisch) |
| Partikelgröße | 6,4 µm (D.50; Laserbeugungsmessgerät, Fa. Malvern). |

In 2500 Teile der vorstehend genannten Slurry werden zur Einstellung des geeigneten Viskositäts-profils 56,5 Teile Acrysol® RM-8W (lösemittelfreier nichtionischer Assoziativverdicker, Fa. Rohm & Haas) und 16,2 Teile Viskalex® HV 30 (anionischer Verdicker auf Polyacrylatharzbasis, Fa. Allied Colloids) eingerührt. Die Klarlackslurry hat das nachfolgende Viskositätsprofil:
1020 mPas bei einer Scherrate von 10 s⁻¹
670 mPas bei einer Scherrate von 100 s⁻¹
255 mPas bei einer Scherrate von 1000 s⁻¹.

Die Klarlackslurry hatte eine Mindestfilmbildetemperatur von 48°C. Nach 2-wöchiger Lagerung bei Raumtemperatur zeigte sich ein schwacher Bodensatz, der mit einem Laborrührer innerhalb 5 min wieder homogen aufgerührt werden konnte.

### Beispiel 2

### Die Verwendung der erfindungsgemäßen Pulverklarlackslurry 1 gemäß Beispiel für die Herstellung von mehrschichtigen Lackierungen

Zur Applikation der erfindungsgemäßen Pulverklarlackslurry 1 gemäß Beispiel 1 wurde ein sogenannter integrierter Aufbau vorbereitet, der nachfolgend für den Metallicfarbton "Meteorgrau" beschrieben wird.

Auf mit handelsüblichem Elektrotauchlack kathodisch beschichteten Stahltafeln wurde mit einer Becherpistole zunächst eine Funktionsschicht (Ecoprime® Meteorgrau, BASF Coatings AG) appliziert. Nach 5-Minütigem Ablüften bei Raumtemperatur wurde auf diese Schicht in gleicher Weise ein meteorgrauer Wassermetallic-Basislack (Ecostar® Meteorgrau, BASF Coatings AG) appliziert und anschließend während 10 min bei 80°C vorgetrocknet.

Nach Abkühlen der Tafeln wurde in gleicher Weise die Pulverklarlackslurry 1 appliziert. Hiernach ließ man die Tafeln zunächst 5 min lang ablüften und anschließend 10 min lang bei 80°C vortrocknen. Nach dem Vortrocknen wurde die erfindungsgemäße Pulverklarlackslurry 1 zunächst im UV-Kanal (1200 mJ, Aktiprint Mini 12-1 der Fa. Technigraf GmbH, 61279 Graevenwiesbach) strahlengehärtet und hiernach bei 145°C während 30 min im Umluftofen eingebrannt.

Die erfindungsgemäße Lackierung zeigte ein hervorragendes Aussehen und eine hohe Beständigkeit im Chemikalientest. Bei den applizierten Klarlackschichtdicken waren keine Störungen in Form von Kochern und Mudcracking erkennbar. Die Oberfläche der Klarlackschicht war ausgesprochen glatt.

Die nachfolgende Tabelle gibt einen Überblick über die durchgeführten Tests und die hierbei erhaltenen Ergebnisse.

**Tabelle:**

| **Anwendungstechnische Eigenschaften der erfindungsgemäßen Pulverklarlackslurry** | | |
|---|---|---|
| **Eigenschaften** | | **Beispiel** |
| Klarlack-Schichtdicke | | 40 - 45 µm |
| Glanz bei 20°^{a)} | | 85 |
| Mikroeindringhärte^{b)} | | 185 |
| BART - Säuretest^{c)} | | |
| Chemikalien: | 40°C | 0 |
| | 50°C | 0.5 |
| | 60°C | 1 |
| | 70°C | 7 |
| Etching: | 40°C | 0 |
| | 50°C | 0 |
| | 60°C | 0 |
| | 70°C | 1 |

| | | |
|---|---|---|
| a) Glanzmeßgerät der Fa. Byk | | |
| b) Fischerscope H100V (Diamantpyramide nach Vickers) | | |
| c) Der BART (BASF ACID RESISTANCE TEST) diente der Ermittlung der Beständigkeit von Lackoberflächen gegen Säuren und Laugen (= Chemikalien) und Wassertropfen (= Etching). Dabei wurde die Beschichtung auf einem Gradientenofen nach der Einbrennung weiteren Temperaturbelastungen ausgesetzt (30 min 40°C. 50°C, 60°C und 70°C). Zuvor wurden die Testsubstanzen (Schwefelsäure 15%-ig, 10%-ig, 36%ig; schweflige Säure 6%-ig, Salzsäure 10%-ig und Natronlauge 5%-ig (Chemikalien) sowie vollentsalztes Wasser (Etching); 1, 2, 3 bzw. 4 Tropfen) definiert mit einer Dosierpipette aufgebracht. Im Anschluß an die Einwirkung der Testsubstanzen wurden diese unter fließendem Wasser entfernt und die Beschädigungen nach 24 h entsprechend einer vorgegebenen Skala visuell beurteilt: | | |

| **Benotung** | **Aussehen** |
|---|---|
| 0 | kein Defekt |
| 1 | leichte Markierung |
| 2 | Markierung/Vermattung/keine Erweichung |
| 3 | Markierung/Vermattung/Farbtonveränderung/Erweichung |
| 4 | Risse/beginnende Durchätzung |
| 5 | Klarlack entfernt |

Es wurde jede einzelne Markierung (Spot) ausgewertet und das Ergebnis als Notensumme für die Chemikalien und für das Etching jeweils für eine Temperatur festgehalten.

## Patentansprüche

1. Strukturviskose, mit aktinischer Strahlung sowie gegebenenfalls thermisch härtbare Pulverslurry, enthaltend feste sphärische Partikel einer mittleren Teilchengröße von 0,8 bis 20 µm und einer maximalen Teilchengröße von 30 µm, wobei die Pulverklarlack-Slurry einen Gehalt an Ionen bildenden Gruppen von 0,05 bis 1 meq/g, einen Gehalt an Neutralisationsmitteln von 0,05 bis 1 meq/g und eine Viskosität von (i) 50 bis 1000 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹ aufweist.

2. Die Pulverslurry nach Anspruch 1, **dadurch gekennzeichnet, daß** sie einen Festkörpergehalt von 10 bis 60 Gew.-%, insbesondere 20 bis 50 Gew.-%, hat.

3. Die Pulverslurry nach Anspruch 1 oder 2, **dadurch gekennzeichnet, daß** die mittlere Teilchengröße der festen sphärischen Partikel bei 1 bis 15 µm und insbesondere bei 2 bis 10 µm liegt.

4. Die Pulverslurry nach einem der Ansprüche 1 bis 3, **dadurch gekennzeichnet, daß** hierin ionische Verdicker und nichtionische, gegebenenfalls mit aktinischer Strahlung vernetzbare Assoziativ-Verdicker enthalten sind.

5. Die Pulverslurry nach einem der Ansprüche 1 bis 4, **dadurch gekennzeichnet, daß** die festen sphärischen Partikel Polyacrylate, Polyester, Alkydharze, und/oder Polyurethane als thermisch härtbare Bindemittel und (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate und/oder Silikonacrylate und/oder die entsprechenden Methacrylate als mit aktinischer Strahlung härtbare Bindemitteln enthalten.

6. Die Pulverslurry nach Anspruch 5, **dadurch gekennzeichnet, daß** sie Photoinitiatiatoren und gegebenenfalls Vernetzungsmittel für die themische Härtung enthält.

7. Die Pulverslurry nach einem der Ansprüche 1 bis 6 **dadurch gekennzeichnet, daß** sie eine Mindestfilmbildetemperatur von mehr als 20 °C, insbesondere mehr als 30 °C. aufweist.

8. Die Pulverslurry nach einem der Ansprüche 1 bis 6 **dadurch gekennzeichnet, daß** sie im wesentlichen frei von organischen Lösemitteln und von externen Emulgatoren ist.

9. Verfahren zur Herstellung einer strukturviskosen, mit aktinischer Strahlung und gegebenenfalls thermisch härtbaren Pulverslurry durch
1) Emulgieren einer organischen Lösung, enthaltend
1.1) mit aktinischer Strahlung härtbare Bestandteile und gegebenenfalls
1.2) thermisch härtbare Bestandteile,
wodurch eine Emulsion vom Typ Öl-in-Wasser resultiert,
2) Entfernen des organischen Lösemittels oder der organischen Lösemittel und
3) teilweisen oder völligen Ersatz des entfernten Lösemittelvolumens durch Wasser, wodurch eine Pulverklarlack-Slurry mit festen sphärischen Partikeln resultiert,
**dadurch gekennzeichnet, daß** der Pulverslurry
4) noch mindestens ein ionischer, insbesondere anionischer, Verdicker und mindestens ein nicht ionischer Assoziativ-Verdicker zugesetzt wird.

10. Das Verfahren nach Anspruch 9, **dadurch gekennzeichnet, daß** man hierbei mit Wasser mischbare organische Lösemittel verwendet.

11. Das Verfahren nach Anspruch 9 oder 10, **dadurch gekennzeichnet, daß** man die organischen Lösemittel bei Temperaturen entfernt, welche unterhalb der Glastemperatur Tg der Bindemittel liegt.

12. Das Verfahren nach einem der Ansprüche 9 bis 11, **dadurch gekennzeichnet, daß** die festen sphärischen Partikel eine mittlere Teilchengröße von 0,8 bis 20 µm und insbesondere 3 bis 15 µm sowie eine maximale Teilchengröße von 30 µm aufweisen.

13. Das Verfahren nach einem der Ansprüche 9 bis 12, **dadurch gekennzeichnet, daß** die Pulverslurry einen Gehalt an Ionen bildenden Gruppen von 0, 05 bis 1, vorzugsweise 0,05 bis 0,5 und insbesondere 0,05 bis 0,3 meq/g, einen Gehalt an Neutratisationsmitteln von 0,05 bis 1, 0, vorzugsweise 05 bis 0,5 und insbesondere 0,05 bis 0,3 meq/g und eine Viskosität von (i) 50 bis 1000 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹ aufweist.

14. Verwendung der Pulverslurry gemäß einem der Ansprüche 1 bis 8 oder der gemäß einem der Ansprüche 9 bis 13 hergestellten Pulverslurry für die Herstellung von Klarlacken für die Automobilerst- und die Automobilreparaturlackierung und die industrielle Lackierung.

15. Klarlack, hergestellt aus der Pulverslurry gemäß einem der Ansprüche 1 bis 8 oder der gemäß einem der Ansprüche 9 bis 13 hergestellten Pulverslurry.

16. Verwendung des Klarlacks gemäß Anspruch 15 für die Herstellung einoder mehrschichtiger Klarlackierungen in der Automobilerst- und der Automobilreparaturlackierung und der industriellen Lackierung.

17. Formteile, insbesondere aus Metall, Glas, Holz und/oder Kunststoff, welche mit einer ein- oder mehrschichtigen Klarlacklackierung beschichtet sind, **dadurch gekennzeichnet, daß** die oder mindestens eine der Klarlackschicht(en) aus dem Klarlack gemäß Anspruch 15 hergestellt worden ist.

## Claims

1. A pseudoplastic powder slurry curable with actinic radiation and, if desired, thermally, comprising solid spherical particles with an average size of from 0.8 to 20 µm and a maximum size of 30 µm, and having an ion-forming group content of from 0.05 to 1 meq/g, a neutralizing agent content of from 0.05 to 1 meq/g, and a viscosity of (i) from 50 to 1000 mPas at a shear rate of 1000 s⁻¹, (ii) from 150 to 8000 mPas at a shear rate of 10 s⁻¹, and (iii) from 180 to 12 000 mPas at a shear rate of 1 s⁻¹.

2. The powder slurry of claim 1, which has a solids content of from 10 to 60% by weight, in particular from 20 to 50% by weight.

3. The powder slurry of claim 1 or 2, wherein the average size of the solid spherical particles is from 1 to 15 µm and in particular from 2 to 10 µm.

4. The powder slurry of one of claims 1 to 3, comprising ionic thickeners and nonionic associative thickeners optionally crosslinkable with actinic radiation.

5. The powder slurry of one of claims 1 to 4, wherein the solid spherical particles comprise polyacrylates, polyesters, alkyd resins, and/or polyurethanes as thermally curable binders and (meth)acryloyl-functional (meth)acrylic copolymers, polyether acrylates, polyester acrylates, unsaturated polyesters, epoxy acrylates, urethane acrylates, amino acrylates, melamine acrylates and/or silicone acrylates and/or the corresponding methacrylates as binders curable with actinic radiation.

6. The powder slurry of claim 5, comprising photoinitiators and, if desired, crosslinking agents for the thermal curing.

7. The powder slurry of one of claims 1 to 6, having a minimum film formation temperature of more than 20°C, in particular more than 30°C.

8. The powder slurry of one of claims 1 to 6, which is substantially free from organic solvents and from external emulsifiers.

9. A process for preparing a pseudoplastic powder slurry curable with actinic radiation and, if desired, thermally, by
1) emulsification of an organic solution comprising
1.1) constituents curable with actinic radiation and, if desired,
1.2) constituents curable thermally,
to give an emulsion of the oil-in-water type,
2) removal of the organic solvent or the organic solvents, and
3) partial or complete replacement of the removed solvent volume by water, to give a powder clearcoat slurry comprising solid spherical particles,
wherein the powder slurry is further admixed with
4) at least one ionic, especially anionic, thickener and at least one nonionic associative thickener.

10. The process of claim 9, wherein water-miscible organic solvents are used.

11. The process of claim 9 or 10, wherein the organic solvents are removed at temperatures which lie below the glass transition temperature Tg of the binders.

12. The process of one of claims 9 to 11, wherein the solid spherical particles have an average size of from 0.8 to 20 µm and in particular from 3 to 15 µm and also a maximum size of 30 µm.

13. The process of one of claims 9 to 12, wherein the powder slurry has an ion-forming-group content of from 0.05 to 1, preferably from 0.05 to 0.5, and in particular from 0.05 to 0.3 meq/g, a neutralizing agent content of from 0.05 to 1, 0, preferably from 05 to 0.5, and in particular from 0.05 to 0.3 meq/g, and a viscosity of (i) from 50 to 1000 mPas at a shear rate of 1000 s⁻¹, (ii) from 150 to 8000 mPas at a shear rate of 10 s⁻¹, and (iii) from 180 to 12 000 mPas at a shear rate of 1 s⁻¹.

14. The use of the powder slurry as claimed in one of claims 1 to 8 or of the powder slurry prepared as claimed in one of claims 9 to 13 to prepare clearcoat materials for automotive OEM finishing, automotive refinish, and industrial coating.

15. A clearcoat material prepared from the powder slurry as claimed in one of claims 1 to 8 or from the powder slurry prepared as claimed in one of claims 9 to 13.

16. The use of the clearcoat material as claimed in claim 15 to produce single-coat or multicoat clearcoat systems in automotive OEM finishing, automotive refinish, and industrial coating.

17. A shaped part, particularly of metal, glass, wood and/or plastic, coated with a single-coat or multicoat clearcoat system, wherein the clearcoat or at least one of the clearcoats has been produced from the clearcoat material as claimed in claim 15.

## Revendications

1. Suspension de poudre à viscosité intrinsèque, durcissable par un rayonnement actinique et éventuellement durcissable thermiquement, contenant des particules solides sphériques ayant une taille moyenne de particule de 0,8 à 20 µm et une taille maximale de particule de 30 µm, la suspension de vernis en poudre ayant une teneur en groupes formant des ions de 0,05 à 1 mEq/g, une teneur en agents de neutralisation de 0,05 à 1 mEq/g et une viscosité de (i) 50 à 1 000 mPa.s à une vitesse de cisaillement de 1 000 s⁻¹, (ii) 150 à 8 000 mPa.s à une vitesse de cisaillement de 10 s⁻¹ et (iii) 180 à 12 000 mPa.s à une vitesse de cisaillement de 1 s⁻¹.

2. Suspension de poudre selon la revendication 1, **caractérisée en ce qu'**elle a une teneur en matière solide de 10 à 60 % en poids, en particulier de 20 à 50 % en poids.

3. Suspension de poudre selon la revendication 1 ou 2, **caractérisée en ce que** la taille moyenne de particule des particules solides sphériques va de 1 à 15 µm et en particulier de 2 à 10 µm.

4. Suspension de poudre selon l'une quelconque des revendications 1 à 3, **caractérisée en ce que** des épaississants ioniques et des épaississants associatifs non ioniques éventuellement réticulables par un rayonnement actinique sont contenus dans celle-ci.

5. Suspension de poudre selon l'une quelconque des revendications 1 à 4, **caractérisée en ce que** les particules solides sphériques contiennent des polyacrylates, des polyesters, des résines alkyde et/ou des polyuréthannes en tant que liants durcissables thermiquement et des copolymères (méth)acryliques, à fonction (méth)acryloyle, des polyétheracrylates, des polyesteracrylates, des polyesters insaturés, des époxyacrylates, des uréthanne-acrylates, des aminoacrylates, des mélamine-acrylates et/ou des siliconeacrylates et/ou les méthacrylates correspondants, en tant que liants durcissables par un rayonnement actinique.

6. Suspension de poudre selon la revendication 5, **caractérisée en ce qu'**elle contient des photo-amorceurs et éventuellement des agents de réticulation pour le durcissement thermique.

7. Suspension de poudre selon l'une quelconque des revendications 1 à 6, **caractérisée en ce qu'**elle présente une température minimale de formation de feuil de plus de 20°C, en particulier de plus de 30°C.

8. Suspension de poudre selon l'une quelconque des revendications 1 à 6, **caractérisée en ce qu'**elle est pratiquement dépourvue de solvants organiques et d'émulsifiants externes.

9. Procédé pour la préparation d'une suspension à viscosité intrinsèque, durcissable par un rayonnement actinique et éventuellement durcissable thermiquement, par
1) des émulsification d'une solution organique contenant
1.1) des composants durcissables par un rayonnement actinique et éventuellement
1.2) des composants durcissables thermiquement,
d'où il résulte une émulsion du type huile-dans-eau,
2) élimination du solvant organique ou des solvants organiques et
3) remplacement partiel ou total du volume de solvant éliminé par de l'eau, d'où il résulte une suspension de vernis en poudre comportant des particules solides sphériques,
**caractérisé en ce qu'**on ajoute encore à la suspension de poudre
4) au moins un épaississant ionique, en particulier anionique, et au moins un épaississant associatif non ionique.

10. Procédé selon la revendication 9, **caractérisé en ce qu'**on utilise dans ce procédé des solvants organiques miscibles à l'eau.

11. Procédé selon la revendication 9 ou 10, **caractérisé en ce qu'**on élimine les solvants organiques à des températures qui sont inférieures à la température de transition vitreuse Tg des liants.

12. Procédé selon l'une quelconque des revendications 9 à 11, **caractérisé en ce que** les particules solides sphériques ont une taille moyenne de particule de 0,8 à 20 µm et en particulier de 3 à 15 µm ainsi qu'une taille maximale de particule de 30 µm.

13. Procédé selon l'une quelconque des revendications 9 à 12, **caractérisé en ce que** la suspension de poudre présente une teneur en groupes formant des ions de 0,05 à 1, de préférence de 0,05 à 0,5 et en particulier de 0,05 à 0,3 mEq/g, une teneur en agents de neutralisation de 0,05 à 1,0, de préférence de 05 à 0,5 et en particulier de 0,05 à 0,3 mEq/g et une viscosité de (i) 50 à 1 000 mPa.s à une vitesse de cisaillement de 1 000 s⁻¹, (ii) 150 à 8 000 mPa.s à une vitesse de cisaillement de 10 s⁻¹ et (iii) 180 à 12 000 mPa.s à une vitesse de cisaillement de 1 s⁻¹.

14. Utilisation de la suspension de poudre selon l'une quelconque des revendications 1 à 8 ou de la suspension de poudre préparée selon l'une quelconque des revendications 9 à 13, pour la préparation de vernis pour le peinturage de réparation d'automobiles et le peinturage industriel.

15. Vernis préparé à partir de la suspension de poudre selon l'une quelconque des revendications 1 à 8 ou de la suspension de poudre préparée selon l'une quelconque des revendications 9 à 13.

16. Utilisation du vernis selon la revendication 15, pour la production de revêtements de vernis mono- ou multicouches dans le premier peinturage d'automobiles et le peinturage de réparation d'automobiles et dans le peinturage industriel.

17. Pièces moulées, en particulier à base de métal, verre, bois et/ou matière plastique, qui sont enduites d'un revêtement de vernis mono- ou multicouche, **caractérisées en ce que** la couche de vernis ou au moins l'une des couches de vernis a été produite à partir du vernis selon la revendication 15.
